# EUROPÄISCHE PATENTSCHRIFT

(11) **EP 1 167 577 B1**
(45) Veröffentlichungstag und Bekanntmachung des Hinweises auf die Patenterteilung: **16.04.2008**
(21) Anmeldenummer: 01113454.1
(22) Anmeldetag: 02.06.2001
(51) Int. Cl.: C23G 3/02, G01N 21/956

(54) **Verfahren und Vorrichtung zur automatischen Zundererkennung auf Oberflächen von metallischem Bandgut, insbesondere von warmgewalztem Stahlband und Edelstahlband**
Process and apparatus for automatically detecting scale on metallic strip surfaces, in particular hot rolled steel or stainless steel strip
Procédé et appareil pour détecter automatiquement la calamine sur des surfaces de bandes métalliques, en particulier des bandes laminées à chaud en acier ou en acier inoxydable

(30) Priorität: 30.06.2000 DE 10031978
(43) Veröffentlichungstag der Anmeldung: 02.01.2002
(73) Patentinhaber: SMS Demag AG, 40237 Düsseldorf (DE)
(72) Erfinder: Gonsior, Gregor, Dipl. -Ing., 42349 Wuppertal (DE); Volz, Stefan, 41468 Grimlinghausen (DE)
(74) Vertreter: Klüppel, Walter

(56) Entgegenhaltungen:
- EP-A- 1 106 713
- WO-A-01/61073
- DE-A- 19 743 022
- PATENT ABSTRACTS OF JAPAN vol. 008, no. 184 (C-239), 23. August 1984 (1984-08-23) -& JP 59 076885 A (KAWASAKI SEITETSU KK), 2. Mai 1984 (1984-05-02)
- PATENT ABSTRACTS OF JAPAN vol. 010, no. 017 (C-324), 23. Januar 1986 (1986-01-23) & JP 60 169580 A (SHIN NIPPON SEITETSU KK), 3. September 1985 (1985-09-03)
- PATENT ABSTRACTS OF JAPAN vol. 010, no. 017 (C-324), 23. Januar 1986 (1986-01-23) -& JP 60 169581 A (SHIN NIPPON SEITETSU KK), 3. September 1985 (1985-09-03)
- PATENT ABSTRACTS OF JAPAN vol. 006, no. 094 (C-105), 2. Juni 1982 (1982-06-02) & JP 57 026178 A (SUMITOMO METAL IND LTD), 12. Februar 1982 (1982-02-12)
- PATENT ABSTRACTS OF JAPAN vol. 010, no. 030 (P-426), 5. Februar 1986 (1986-02-05) -& JP 60 179637 A (KAWASAKI SEITETSU KK;OTHERS: 01), 13. September 1985 (1985-09-13)

## Beschreibung

Die Erfindung betrifft eine Einrichtung zur automatischen Zundererkennung auf Oberflächen von metallischem Bandgut, insbesondere von warmgewalztem Stahlband oder Edelstahlband, mittels einer optischen Vorrichtung, wobei die Bandoberfläche des metallischen Bandgutes, vor dem Eintritt in die Vorbehandlung einer Beizvorrichtung, kontinuierlich mittels einer oder mehreren elektronischen Kameras abgetastet wird, wobei Informationen über Farbe, Farbspektren, Oberflächenstrukturen, Rauhigkeit und / oder Farbmuster in digitalisierter Form als Verzunderungsmuster gespeichert werden und dann die gespeicherten Daten mittels einer rechnergestützten Mustererkennung und einer angeschlossenen Musterauswertung verarbeitet und in einer Steuerung eingesetzt werden.

Der Betrieb von Beizanlagen ist in hohem Maß von der abzutragenden Zunderschicht in Dicke und Verteilung abhängig und kann in Anbetracht der Kosten für die Reinheit des behandelten Metallbandes und dem Metallanteil in dem sich verbrauchenden Beizmedium zur Unwirtschaftlichkeit führen. Es sind ein Beizverfahren und die zugehörige Einrichtung bekannt (DE 197 43 022 A1)Der Zunder wird mittels eines optischen Messgerätes gemessen und das Signal des Messgerätes einem Klassifikator und einem Bewerter zugeleitet. Diese Verfahrensweise beschäftigt sich im wesentlichen mit den Beizparametern im Beizbecken und ist bemüht, die sich im Beizbecken einstellenden Beizparameter für das Entfernen von Zunderschichten, der Temperatur der Beizflüssigkeit, der Bandtransportgeschwindigkeit, dem Säuregehalt des Beizmediums, dem Metallgehalt in dem Beizmedium, insbesondere dem Eisengehalt in der Beizflüssigkeit, den Bandparametern, wie z.B. Material mit geometrischen Abmessungen und dem Turbulenzdruck der Beizflüssigkeit, festzustellen und die diesbezüglichen Regelungen im Beizbecken zu beeinflussen. Da diese Parameter aber erst im Beizbecken gemessen werden, ist es zu spät für präventive Maßnahmen, die den Zunderabtrag betreffen.

Ein nicht ganz diese bekannte Verfahrensweise und Bauweise treffendes Verfahren ist aus der JP57026178 bekannt. Das Verfahren sieht eine Dickenmessung der Zunderschicht vor, deren Werte über einen Rechner zu einer örtlich geregelten Eindüsung des Beizmediums mit entsprechend korrigierten Parametern führen. Auch dieses Verfahren ist daher auf den Zustand des Metallbandes im Beizbecken angewiesen und auch hier sind keine präventiven Maßnahmen erkennbar. Im übrigen ist die Dickenmessung der Zunderschichten in der Fachwelt umstritten.

Aus der JP 59 076 885 A ist ferner ein Beizverfahren für warmgewalztes Stahlband bekannt. Über und unter dem Stahlband angeordnete Düsenstrahlen werden auf noch nicht entfernten Zunder gerichtet, der kontinuierlich durch auf beiden Seiten des Stahlbandes angeordnete Kameras kontrolliert wird. Diese Kameras kontrollieren die Helligkeitsunterschiede zwischen Gebieten mit und ohne Zunder vor Einlauf des Stahlbandes in den letzten Beiztank. Die Helligkeitsunterschiede sind jedoch nur sehr schwierig zu messen und zu verarbeiten.

Aus der JP 60 169 580 ist es bekannt, die verbleibende Zunderverteilung als Muster durch elektronisches Abtasten mit einem photoelektrischen Messwandler zu ermitteln. Dazu werden ein Messkreis zum Berechnen eines Index der verbleibenden Zunderverteilung und ein weiterer Messkreis zum Unterscheiden des Musters des verbleibenden Zunders eingesetzt. Diese Messkreise bestimmen einen Höchstwert des Differenzsignals des Messwandlers einschließlich des Mittelwertsignals, des letzten Signals, der sich aus der Mehrzahl der Signale und den verbleibenden Signalen ergibt. Das Muster des verbleibenden Zunders wird unterschieden von dem Größenverhältnis der beiden Höchstwerte und den unterschiedlichen Mustern des verbleibenden Zunders und wird auf einem Bildschirm dargestellt.

Ferner ist aus der JP 60 169 581 A ein zu dem vorher beschriebenen Verfahren sehr ähnliches Verfahren bekannt, wobei drei Werte (Berechnen eines Index der verbleibenden Zunderverteilung und ein Messkreis zum Unterscheiden des Musters des verbleibenden Zunders als integrierter Wert, ein abweichender Bereich und ein Mittelwert) in spezielle Umwandlungs-Gleichungen eingesetzt werden. Es ist jedoch offen, welche genauen Vergleichsgrundlagen angenommen werden.

Der Erfindung liegt die Aufgabe zugrunde, auf optischem Weg vor der Behandlung des Metallbandes im Beizbecken präventive Maßnahmen zu ermöglichen und dabei die optischen Messwerte für die Behandlung des Metallbandes einzusetzen.

Die gestellte Aufgabe wird bei einer Einrichtung zur automatischen Zundererkennung auf Oberflächen von metallischem Bandgut, insbesondere von warmgewalztem Stahlband oder Edelstahlband, mittels einer optischen Vorrichtung, wobei die Bandoberfläche des metallischen Bandgutes, vor dem Eintritt in die Vorbehandlung einer Beizvorrichtung, kontinuierlich mittels einer oder mehreren elektronischen Kameras abgetastet wird, wobei Informationen über Farbe, Farbspektren, Oberflächenstrukturen, Rauhigkeit und /oder Farbmuster in digitalisierter Form als Verzunderungsmuster gespeichert werden und dann die gespeicherten Daten mittels einer rechnergestützten Mustererkennung und einer angeschlossenen Musterauswertung verarbeitet und in einer Steuerung eingesetzt werden, erfindungsgemäß dadurch gelöst, dass die Steuerung an den Antrieb und die Regel- und/oder Stellglieder einer Vorbehandlung vor der chemischen Beize sowie an den Antrieb und die Regel- und/oder Stellglieder der Beizstrecke angeschlossen wird, und dass die derart erzeugten Steuersignale über die Steuerung der Vorbehandlung und der Beizstrecke zugeführt werden.

In Ausgestaltung der Vorrichtung ist vorgesehen, dass mittels der rechnergestützten Mustererkennung und Musterauswertung Daten über den Werkstoff, den Zunderaufbau, die Zunderverteilung, die Haspelabkühlung, die Wickelqualität und / oder die Abkühldauer des Wickelbundes in einer Steuerung einsetzbar sind. Dadurch können die Steuersignale für die Vorbehandlung und / oder für die Beizstrecke relativ genau errechnet werden, was für den weiteren Verlauf der Steuerung und/oder Regelung von Bedeutung ist. Eine durchgängige Beizqualität lässt sich besser erreichen, da Einflüsse, die bislang gar nicht oder nur schlecht quantifizierbar waren (z.B. Wickelqualität, Unregelmäßigkeiten im Produktionsprozess im Warmwalzwerk) automatisch ausgewertet werden.

Weiterhin können die ermittelten Daten dahingehend eingesetzt werden, dass über die Steuerung die Beizparameter für die Beizzeit, die Beiztemperatur und über Druck und Richtung von Düsenstrahlen die Turbulenz des Beizmediums einstellbar sind.

Die Erfindung ist außerdem dadurch weiterentwickelt, dass die Steuerung an thermische Einrichtungen für die Banderwärmung, an chemische Einrichtungen für die Einstellung der chemischen Beizparameter und / oder an mechanische Einrichtungen zur mechanischen Bearbeitung der Bandoberflächen angeschlossen ist. Diese Maßnahmen können entweder für die Vorbehandlung oder für die Beizstrecke oder gemischt angewendet werden. Die thermische Beeinflussung kann dadurch an Brennern, Induktionsschleifen, Infrarotstrahlern und Lasern geregelt werden. Die chemische Beeinflussung erfasst gezieltes Nachschärfen von Frischsäure, Zugaben von Beizbeschleunigern und die gezielte Injektion von Frischsäuren und / oder Beizbeschleunigern auf die kritischen Bandbereiche, wie z.B. die Bandränder. Die mechanische Beeinflussung erfasst den Einsatz von Bürsten, von Hochdrucklanzen, die Variation der Fahrweise eines Streckbiegerichters, falls ein solcher angewendet wird. Das jeweils am besten geeignete Verfahren oder auch die beste Kombination der aufgeführten Verfahren ist vom Anlagen-Layout, vom Materialspektrum und von technologischen und wirtschaftlichen Grundlagen des Anlagebetriebes einer Beize abhängig.

Schließlich besteht eine andere Ausgestaltung darin, dass die Steuerung an den Antrieb und die Regel- und/oder Stellglieder der Beizstrecke über Fahrsignale und bandbezogene Sollwert-Beeinflussungen angeschlossen ist.

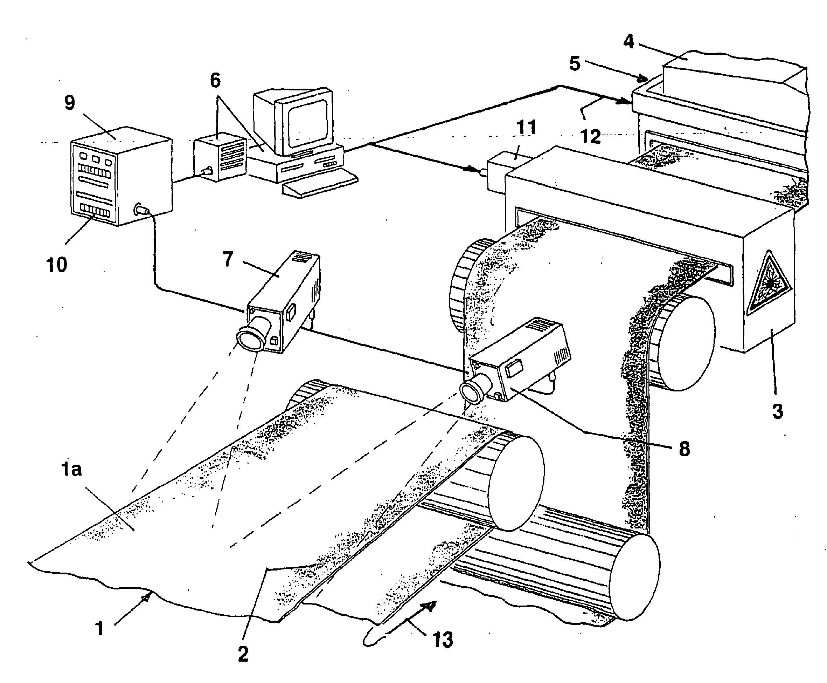

In der Zeichnung ist ein Ausführungsbeispiel der erfindungsgemäßen Vorrichtung dargestellt, anhand dessen das Verfahren nachstehend näher erläutert wird.

Die einzige Figur der Zeichnung zeigt in perspektivischer Darstellung des Metallband-Weges das zugehörige Blockdiagramm.

Die Einrichtung zur automatischen Zundererkennung auf Bandoberflächen 1a von metallischem Bandgut 1, insbesondere von warmgewalztem Stahlband oder Edelstahlband, arbeitet mittels einer optischen Vorrichtung. Dabei wird die Bandoberfläche 1 a des metallischen Bandgutes 1 kontinuierlich mittels einer oder mehreren elektronischen Kameras 7 und 8 abgetastet, wobei Informationen (Daten) über Farbe, Farbspektren, Oberflächenstrukturen, Rauhigkeit und / oder Farbmuster gespeichert werden. Die gespeicherten Daten (über den Werkstoff, den Zunderaufbau, die Zunderverteilung, die Haspelkühlung, die Wickelqualität und / oder die Abkühldauer des Wickelbundes) werden mittels einer rechnergestützten Mustererkennung 9 und einer angeschlossenen Musterauswertung 10 in einer Steuerung 6 eingesetzt. Über diese Steuerung 6 sind die Beizparameter für die Beizzeit, die Beiztemperatur und über Druck und Richtung von Düsenstrahlen die Turbulenz des Beizmediums einstellbar. Die Steuerung 6 kann an thermische Einrichtungen für die Banderwärmung, an chemische Einrichtungen für die Einstellung der chemischen Beizparameter und / oder an mechanische Einrichtungen zur mechanischen Bearbeitung der Bandoberflächen 1a angeschlossen werden.

Im Ausführungsbeispiel ist die Steuerung 6 an einen Antrieb 11 und die Regel- und / oder Stellglieder einer Vorbehandlung 3 vor der chemischen Beize 4 angeschlossen. Dabei kann vorgesehen ein, dass die Steuerung 6 den Antrieb 12 und die Regel- und/oder Stellglieder der Beizstrecke 5 über Fahrsignale und bandbezogene Sollwert-Beeinflussungen betätigt.

Das Verfahren wird wie folgt ausgeübt: Die Bandoberfläche 1 a bewegt sich in Bandtransportrichtung 13 unter den elektronischen Kameras 7 und 8 kontinuierlich vorbei. Die Kameras 7 und 8 nehmen Verzunderungsmuster 2 in digitalisierter Form auf, die in der Mustererkennung 9 aufgrund eines Vergleichs mit einem gespeicherten digitalen Muster zu Steuerungssignalen in der Musterauswertung 10 verarbeitet werden. Die derart erzeugten Steuersignale werden über die Steuerung 6 der Vorbehandlung 3 (und / oder der Beizstrecke 5) zugeführt, in der bereits in hohem Maß Zunderanteile chemisch, thermisch und / oder mechanisch abgebaut werden. Aufgrund dieser Vorbehandlung kann schon eine Anpassung von Beizparametern in der Beizstrecke 5 erfolgen, so dass dort nicht mehr wie früher die Hauptarbeit zu leisten ist. Aus diesem Grund kann auch die Bandtransport-Geschwindigkeit erhöht werden.

### Bezugszeichenliste

- 1: metallisches Bandgut
- 1a: Bandoberfläche
- 2: Verzunderungsmuster
- 3: Vorbehandlung
- 4: chemische Beize
- 5: Beizstrecke
- 6: Steuerung
- 7: elektronische Kamera
- 8: elektronische Kamera
- 9: Mustererkennung
- 10: Musterauswertung
- 11: Antrieb für Vorbehandlung
- 12: Antrieb für Beizstrecke
- 13: Bandtransportrichtung

## Patentansprüche

1. Einrichtung zur automatischen Zundererkennung auf Oberflächen (1a) von metallischem Bandgut (1) mittels einer optischen Vorrichtung, wobei die Bandoberfläche (1a) des metallischen Bandgutes (1), vor dem Eintritt in die Vorbehandlung (3) einer Beizvorrichtung, kontinuierlich mittels einer oder mehreren elektronischen Kameras (7) und (8) abgetastet wird, wobei Informationen über Farbe, Farbspektren, Oberflächenstrukturen, Rauhigkeit und / oder Farbmuster in digitalisierter Form als Verzunderungsmuster (2) gespeichert werden und dann die gespeicherten Daten mittels einer rechnergestützten Mustererkennung (9) und einer angeschlossenen Musterauswertung (10) verarbeitet und in einer Steuerung (6) eingesetzt werden,
**dadurch gekennzeichnet,**
**dass** die Steuerung (6) an den Antrieb (11) und die Regel- und/oder Stellglieder einer Vorbehandlung (3) vor der chemischen Beize (4) sowie an den Antrieb (12) und die Regel- und/oder Stellglieder der Beizstrecke (5) angeschlossen wird, und dass die derart erzeugten Steuersignale über die Steuerung (6) der Vorbehandlung (3) und der Beizstrecke (5) zugeführt werden.

2. Einrichtung nach Anspruch 1,
**dadurch gekennzeichnet,**
**dass** mittels einer rechnergestützten Mustererkennung (9) und Musterauswertung (10) Daten über den Werkstoff, den Zunderaufbau, die Zunderverteilung, die Haspelabkühlung, die Wickelqualität und / oder die Abkühldauer des Wickelbundes in einer Steuerung (6) einsetzbar sind.

3. Einrichtung nach einem der Ansprüche 1 oder 2,
**dadurch gekennzeichnet,**
**dass** über die Steuerung (6) die Beizparameter für die Beizzeit, die Beiztemperatur und über Druck und Richtung von Düsenstrahlen die Turbulenz des Beizmediums einstellbar sind.

4. Einrichtung nach einem der Ansprüche 1 bis 3,
**dadurch gekennzeichnet,**
**dass** die Steuerung (6) an thermische Einrichtungen für die Banderwärmung, an chemische Einrichtungen für die Einstellung der chemischen Beizparameter und / oder an mechanische Einrichtungen zur mechanischen Bearbeitung der Bandoberflächen (1a) angeschlossen ist.

5. Einrichtung nach einem der Ansprüche 1 bis 4,
**dadurch gekennzeichnet,**
**dass** die Steuerung (6) an den Antrieb (12) und die Regel- und / oder Stellglieder der Beizstrecke (5) über Fahrsignale und bandbezogene Sollwert-Beeinflussungen angeschlossen ist.

## Claims

1. Equipment for automatic scale recognition on surfaces (1 a) of metallic strip stock (1) by means of an optical device, wherein the strip surface (1a) of the metallic strip stock (1) is continuously scanned by means of one or more electronic cameras (7 and 8) before entry into the pre-treatment means (3) of a pickling device, wherein data about colour, colour spectra, surface structures, roughness and/or colour pattern are stored in digitalised form as a scale pattern (2) and then the stored data are processed by means of a computer-assisted pattern recognition means (9) and a connected pattern evaluating means (10) and used in a control means (6), **characterised in that** the control means (6) is connected with the drive (11) and the regulating and/or setting elements of a pre-treatment means (3) before the chemical pickling means (4) as well as with the drive (12) and the regulating and/or setting elements of the pickling path (5) and that the control signals produced **in that** manner are fed by way of the control means (6) to the pre-treatment means (3) and the pickling path (5).

2. Equipment according to claim 1, **characterised in that** data about the material, build up of scale, scale distribution, coiler cooling down, winding quality and/or cooling-down duration of the wound coil are usable in a control means (6) by way of a computer-assisted pattern recognition means (9) and pattern evaluating means (10).

3. Equipment according to one of claims 1 and 2, **characterised in that** the pickling parameters for the pickling time and the pickling temperature are settable by way of the control means (6) and the turbulence of the pickling medium is settable by way of pressure and direction of nozzle jets.

4. Equipment according to one of claims 1 to 3, **characterised in that** the control means (6) is connected with thermal devices for strip heating, with chemical devices for setting of the chemical pickling parameters and/or with mechanical devices for mechanical processing of the strip surfaces (1a).

5. Equipment according to one of claims 1 to 4, **characterised in that** the control means (6) is connected with the drive (12) and the regulating and/or setting elements of the pickling path (5) by way of travel signals and strip-related target value influencings.

## Revendications

1. Dispositif pour la détection automatique de la calamine sur les surfaces (1a) d'un produit en bande métallique (1) au moyen d'un dispositif optique, la surface (1a) de la bande métallique (1), avant l'entrée dans le prétraitement (3) d'un dispositif de décapage, étant balayée en continu au moyen d'une ou de plusieurs caméras électroniques (7) et (8), des informations concernant la couleur, les spectres de couleur, les structures de surface, les rugosités et/ou les modèles de couleur, étant enregistrées sous forme digitalisée comme modèle de calaminage (2), puis les données enregistrées étant traitées au moyen d'une détection de modèle (9) soutenue par un ordinateur et une évaluation de modèle (10) associée et utilisées dans un dispositif de commande (6), **caractérisé**
**en ce que** le dispositif de commande (6) est raccordé au dispositif d'entraînement (11) et aux organes de régulation et/ou de réglage d'un prétraitement (3) en amont du décapage chimique (4) ainsi qu'au dispositif d'entraînement (12) et aux organes de régulation et/ou de réglage de la zone de décapage (5) et en ce que les signaux de commande ainsi obtenus sont transmis via le dispositif de commande (6) au prétraitement (3) et à la zone de décapage (5).

2. Dispositif selon la revendication 1, **caractérisé**
**en ce que**, via une détection de modèle (9) et une évaluation de modèle (10) soutenues par un ordinateur, des données relatives au matériau, à la formation de calamine, à la répartition de la calamine, au refroidissement sur la bobineuse, à la qualité de la bobine et/ou à la durée de refroidissement d'une bobine enroulée sont utilisables dans un dispositif de commande (6).

3. Dispositif selon l'une quelconque des revendications 1 ou 2, **caractérisé**
**en ce que**, via le dispositif de commande (6), les paramètres de décapage pour le temps de décapage, la température de décapage et, via la pression et l'orientation des jets des pulvérisateurs, la turbulence de l'agent de décapage, sont réglables.

4. Dispositif selon l'une quelconque des revendications 1 à 3, **caractérisé**
**en ce que** le dispositif de commande (6) est raccordé à des dispositifs thermiques pour le réchauffement de la bande, à des dispositifs chimiques pour le réglage des paramètres chimiques de décapage et/ou à des dispositifs mécaniques pour le traitement mécanique des surfaces (1 a) de la bande.

5. Dispositif selon l'une quelconque des revendications 1 à 4, **caractérisé**
**en ce que** le dispositif de commande (6) est raccordé au dispositif d'entraînement (12) et aux organes de régulation et/ou de réglage de la zone de décapage (5) via des signaux d'avancement et des influences de la valeur de consigne relatives à la bande.
